# EUROPÄISCHE PATENTSCHRIFT

(11) **EP 1 071 589 B1**
(45) Veröffentlichungstag und Bekanntmachung des Hinweises auf die Patenterteilung: **03.11.2004**
(21) Anmeldenummer: 99913094.1
(22) Anmeldetag: 03.03.1999
(51) Int. Cl.: B60S 1/08

(54) **SCHEIBENWISCHVORRICHTUNG**
WINDSHIELD WIPER DEVICE
DISPOSITIF D'ESSUIE-GLACE

(30) Priorität: 23.04.1998 DE 19818173
(43) Veröffentlichungstag der Anmeldung: 31.01.2001
(73) Patentinhaber: ROBERT BOSCH GMBH, 70442 Stuttgart (DE)
(72) Erfinder: MICHENFELDER, Gebhard, D-77839 Lichtenau (DE); MAY, Michael, D-77654 Offenburg (DE)
(86) Internationale Anmeldenummer: PCT/DE1999/000551
(87) Internationale Veröffentlichungsnummer: WO 1999/055563

(56) Entgegenhaltungen:
- DE-C- 19 700 457
- FR-A- 2 757 467
- GB-A- 2 311 208
- US-A- 4 866 357
- PATENT ABSTRACTS OF JAPAN vol. 007, no. 050 (M-197), 26. Februar 1983 (1983-02-26) & JP 57 198146 A (NITSUSAN SHIYATAI KK), 4. Dezember 1982 (1982-12-04)

## Beschreibung

### Stand der Technik

Die Erfindung bezieht sich auf eine Scheibenwischvorrichtung mit einem Elektromotor, der nach Maßgabe eines Ansteuersignals einer Steuerschaltung eine mindestens einen Wischerraum aufweisende Wischanlage antreibt.

Der Oberbegriff des Anspruchs 1 ist aus der US- 4866357 bekannt.

Eine Scheibenwischvorrichtung dieser Art ist in der DE 44 17 371 A1 als bekannt ausgewiesen. Bei dieser bekannten Scheibenwischvorrichtung wird ein die Wischanlage mit dem Wischerarm antreibender Elektromotor nach Maßgabe eines Ansteuersignals einer Steuerschaltung betrieben. Die Steuerschaltung ist so ausgelegt, daß die vorgegebenen Wischwinkeltoleranzen im Bereich der Endlagen des Wischerarms weitgehend unabhängig von der Bewegungsenergie des Scheibenwischers eingehalten werden. Ein noch ungelöstes Problem besteht darin, daß der Wischverlauf während der Fahrt häufig ungleichmäßig ist, wobei insbesondere unterschiedliche Geschwindigkeiten des Wischerarm während der Aufwärts- und Abwärtsbewegung auftreten.

### Vorteile der Erfindung

Der Erfindung liegt die Aufgabe zugrunde, eine Scheibenwischervorrichtung der eingangs genannten Art bereitzustellen, bei der ein möglichst gleichmäßiger Wischverlauf entsprechend einer vorgegebenen Wischgeschwindigkeitsstufe eingehalten wird.

Diese Aufgabe wird mit den Merkmalen des Anspruchs 1 gelöst. Hiernach ist vorgesehen, daß die Steuerschaltung eine Steuerstufe zum Ändern des Ansteuersignals in Abhängigkeit einer Windlast aufweist. Durch die zusätzliche Anordnung der Steuerstufe mit der Eigenschaft, daß das Ansteuersignal in Abhängigkeit einer Windlast geändert wird, wird insbesondere bei relativ hoher Geschwindigkeit die Aufwärtsbewegung des Wischers auf das der eingestellten Wischgeschwindigkeit im wesentlichen entsprechende Maß verlangsamt und die Geschwindigkeit der Abwärtsbewegung im wesentlichen auf den Vorgabewert gebracht, so daß sich ein gleichmäßiges, den Fahrer nicht störenden Wischverlauf ergibt. Zudem wird auch eine gewünschte maximale Ausschlagposition stets eingehalten, womit stets ein optimales Wischfeld eingehalten wird.

Ohne spezielle Sensoren zur direkten Erfassung der Windlast (was auch möglich ist) kann diese auf einfache Weise mit gutem Ergebnis dadurch angegeben werden, daß die Windlast aus der Fahrzeuggeschwindigkeit und/oder der Wischergeschwindigkeit ermittelt ist, wobei die Werte der Windlast in einem Speicher abgelegt sind oder ständig neu berechnet werden. Dabei kann die Fahrzeuggeschwindigkeit einfach dadurch bereitgestellt werden, daß diese aus einem Tachosignal entnommen ist, während die Wischergeschwindigkeit aus einem von einer Kontaktscheibe, die zum Erzeugen eines absoluten Positionssignals ohnehin vorhanden ist, und/oder einem von einem Hallschalter, der für ein relatives Positionssignal ebenfalls ohnehin vorhanden ist, abgegriffenen Signal bestimmt wird.

Das Ansteuersignal kann beispielsweise gegenüber einer herkömmlichen Steuerschaltung mit wenig Aufwand in der Weise bereitgestellt werden, daß es aus einem von einem Stellgrößengenerator oder einem Regler erzeugten Stellgrößensignal und einem in der Steuerstufe erzeugten Korrektursignal gebildet ist.

Um die Wischergeschwindigkeit in beiden Wischrichtungen möglichst gut anzugleichen, sind weiterhin die Maßnahmen vorteilhaft, daß das Ansteuersignal in Abhängigkeit der Windlast bei Abwärtsbewegung des Wischerarms verstärkt und bei Aufwärtsbewegung des Wischerarms vermindert wird. Hierbei kann bei der Aufwärtsbewegung erforderlichenfalls auch eine Bremswirkung mittels des Ansteuersignals erzeugt werden.

Ist vorgesehen, daß das Ansteuersignal ein pulsweitenmoduliertes Signal ist, so läßt sich das Ansteuersignal durch Ändern der Pulsweite in Abhängigkeit der Windlast leicht durch das Korrektursignal manipulieren.

Die Erfindung wird nachfolgend anhand von Ausführungsbeispielen unter Bezugnahme auf die Zeichnungen näher erläutert. Es zeigen:
- Fig. 1: eine Scheibenwischvorrichtung in Blockdarstellung mit einem geregelten Ansteuersystem und
- Fig. 2: eine Scheibenwischvorrichtung in Blockdarstellung mit einem Steuersystem ohne Lageregelung.

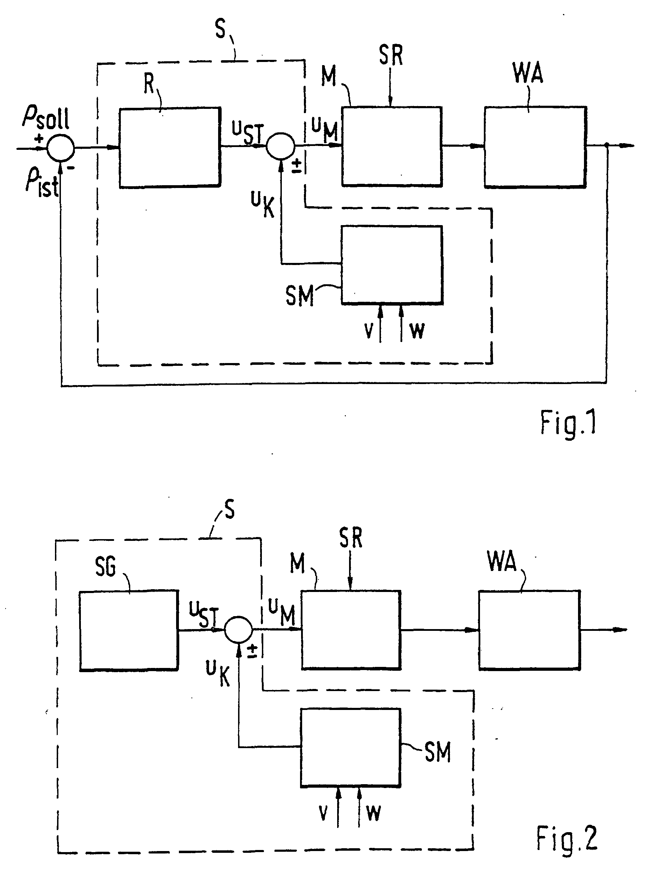

Die in Fig. 1 in Blockdarstellung gezeigte Scheibenwischvorrichtung weist einen Regler R, einen Elektromotor M, eine Wischanlage WA, die im wesentlichen die bewegten mechanischen Elemente umfaßt, sowie eine als Sollwertmanipulator SM ausgebildete Steuerstufe auf.

In dem Regler R wird unter Berücksichtigung einer aus einer während des Wischverlaufs in kurzen Zeitabständen gebildeten Regelabweichung aus einer Sollposition ρₛₒₗₗ und einer erfaßten Istposition ρᵢₛₜ ein Stellgrößensignal u_{ST} in Form eines Spannungs- und/oder Stromsignals erzeugt. Das Stellgrößensignal u_{ST} wird mittels eines Korrektursignals u_{K} geändert, das von der Steuerstufe in Form des Sollwertmanipulators SM abgegeben wird. Das manipulierte Stellgrößensignal bildet ein Ansteuersignal u_{M}, und zwar ebenfalls ein Spannungs- und/oder ein Stromsignal, des Elektromotors M. Auf den Elektromotor M können äußere Störgrößen SR wirken. Die Istposition *ρ*ᵢₛₜ der von dem Elektromotor M angetriebenen Wischeranlage WA wird als Istwert zur Bildung der Regelabweichung vor den Eingang des Reglers R zurückgeführt.

In dem Sollwertmanipulator SM sind einer jeweiligen Windlast entsprechende Werte erzeugt oder in einer Tabelle abgelegt, um daraus das Korrektursignal u_{K} zu bilden. Da die Werte der Windlast eng mit einer jeweiligen Fahrzeuggeschwindigkeit v und/oder einer Wischergeschwindigkeit w korrelieren, können auch unmittelbar die Fahrzeuggeschwindigkeit v und/oder die Wischergeschwindigkeit w zur Berechnung oder Speicherung der Windlast-Werte herangezogen werden. Die aktuelle Fahrzeuggeschwindigkeit v wird vorzugsweise aus einem ohnehin vorhandenen Tachosignal gewonnen, während die Wischergeschwindigkeit w von einer vorhandenen Kontaktscheibe, die herkömmlicherweise der Bildung eines Absolutsignals der Wischerposition dient, und/oder aus relativen Positionssignalen eines Hallschalters oder eines entsprechenden

Positionssensors gewonnen wird. Das in der Steuerstufe SM gebildete Korrektursignal u_{K} wird zur Unterstützung der Abwärtsbewegung des Wischerarms gegen die Windlast dem Stellgrößensignal u_{ST} zugefügt, während das Korrektursignal u_{K} bei der durch die Windlast beschleunigten Aufwärtsbewegung des Wischerarms von dem Stellgrößensignal u_{ST} abgezogen wird, um ein verringertes Ansteuersignal u_{M} zu erzeugen. Gegebenenfalls kann auch eine Bremswirkung erzielt werden.

Das vergrößerte bzw. verringerte Stellgrößensignal u_{ST} vermag als neues Ansteuersignal die der gewählten Geschwindigkeitsstufe entsprechende Wischbewegung im Gegensatz zu dem Stellgrößensignal u_{ST} wirkungsvoll nachzuführen, so daß sich ein gleichmäßiges Wischbild während der Aufwärts- und Abwärtsbewegung praktisch ohne Unterschied ergibt.

In Fig. 2 ist eine der Fig. 1 entsprechende Manipulation des Stellgrößensignals u_{ST} wiedergegeben. Das Steuersystem ist hierbei jedoch insgesamt als einfaches System ohne Lageregelung ausgebildet, wobei der in Fig. 1 angegebene Regler R durch einen Stellgrößengenerator SG ersetzt ist. Bezüglich der Manipulation des Stellgrößensignals u_{ST} mit dem Korrektursignal u_{K} und der Erzeugung des Korrektursignals u_{K} sowie der Bildung des Ansteuersignals u_{M} entspricht die Steuerschaltung S derjenigen gemäß Fig. 1.

Als Ansteuersignal U_{M} des Elektromotors M eignet sich insbesondere ein pulsweitenmoduliertes Signal, wobei die Pulsweite des Stellgrößensignals u_{ST} bei Windlast während der Aufwärtsbewegung durch das Korrektursignal u_{K} verringert und während der Abwärtsbewegung vergrößert wird.

## Patentansprüche

1. Scheibenwischvorrichtung mit einem Elektromotor (M), der nach Maßgabe eines Ansteuersignals (UM) einer Steuerschaltung (S) eine mindestens einen Wischerraum aufweisende Wischanlage (WA) antreibt, und die Steuerschaltung (S) eine Steuerstufe (SM) zum Ändern des Ansteuersignals (UM) in Abhängigkeit einer Windlast aufweist **dadurch gekennzeichnet, daß** das Ansteuersignal (UM) in Abhängigkeit der Windlast bei Abwärtsbewegung des Wischerarms verstärkt und bei Aufwärtsbewegung des Wischerarms vermindert wird, wobei die Windlast aus der Fahrzeuggeschwindigkeit (v) und/oder der Wischergeschwindigkeit (w) ermittelt ist, wobei die Werte der Windlast in einem Speicher abgelegt sind oder ständig neu berechnet werden.

2. Scheibenwischvorrichtung nach Anspruch 1,
**dadurch gekennzeichnet,**
**daß** die Fahrzeuggeschwindigkeit (v) aus einem Tachosignal entnommen ist und
**daß** die Wischergeschwindigkeit (w) aus einem von einer Kontaktscheibe und/oder einem Hallschalter abgegriffenen Signal bestimmt ist.

3. Scheibenwischvorrichtung nach einem der Ansprüche,
**dadurch gekennzeichnet,**
**daß** das Ansteuersignal (u_{M}) aus einem von einem Stellgrößengenerator (SG) oder einem Regler (R) erzeugten Stellgrößensignal (u_{ST}) und einem in der Steuerstufe (SM) erzeugten Korrektursignal (u_{K}) gebildet ist.

4. Scheibenwischvorrichtung nach einem der vorhergehenden Ans prüche,
**dadurch gekennzeichnet,**
**daß** das Ansteuersignal (u_{M}) ein pulsweitenmoduliertes Signal ist.

## Claims

1. Windscreen wiper device having an electric motor (M) which drives a wiping system (WA) in accordance with an actuation signal (U_{M}) of a control circuit (S), said wiping system (WA) having at least one wiper space, and the control circuit (S) has a control stage (SM) for changing the actuation signal (U_{M}) as a function of a wind load, **characterized in that** the actuation signal (U_{M}) is increased as a function of the wind load when the wiper arm moves downwards, and is decreased as a function of the wind load when the wiper arm moves upwards, the wind load being determined from the speed (v) of the vehicle and/or the wiper speed (w), the values of the wind load being stored in a memory or being continuously recalculated.

2. Windscreen wiper device according to Claim 1, **characterized in that** the speed (v) of the vehicle is obtained from a speedometer signal, and **in that** the speed (w) of the wiper is determined from a signal which is capped by a contact plate and/or a Hall switch.

3. Windscreen wiper device according to one of the claims, **characterized in that** the actuation signal (U_{M}) is formed from a manipulated variable signal (u_{ST}) which is generated by a manipulated variable generator (SG) or a controller (R), and a correction signal (u_{K}) which is generated in the control stage (SM).

4. The windscreen wiper device as claimed in one of the preceding claims, **characterized in that** the actuation signal (u_{M}) is a pulse-width modulated signal.

## Revendications

1. Dispositif d'essuie-glace comprenant un moteur électrique (M) qui entraîne une installation d'essuyage (WA) comportant au moins un bras d'essuyage selon l'indication d'un signal de commande (U_{M}) fourni par un circuit de commande (S),
le circuit de commande (S) comportant un étage de commande (SM) pour modifier le signal de commande (U_{M}) en fonction de la charge appliquée par le vent,
**caractérisé en ce que**
le signal de commande (U_{M}) en fonction de la charge appliquée par le vent est amplifié pour le mouvement descendant du bras d'essuie-glace et diminué pour le mouvement de remontée du bras d'essuie-glace, et la charge appliquée par le vent est déterminée à partir de la vitesse du véhicule et/ou de la vitesse d'essuyage (w), les valeurs de la charge appliquée par le vent étant enregistrées dans une mémoire ou étant recalculées à nouveau en permanence.

2. Dispositif d'essuie-glace selon la revendication 1,
**caractérisé en ce que**
la vitesse du véhicule (v) est fournie par un signal tachymétrique et la vitesse d'essuyage (w) est déterminée à partir d'un signal prélevé sur un disque de contact et/ou un commutateur à effet Hall.

3. Dispositif d'essuie-glace selon l'une des revendications précédentes,
**caractérisé en ce que**
le signal de commande (U_{M}) est formé à partir d'un signal de grandeur de réglage (U_{ST}) fourni par un générateur de grandeur de réglage (SG) ou un régulateur (R), et d'un signal de correction (U_{K}) fourni par un étage de commande (SM).

4. Dispositif d'essuie-glace selon l'une des revendications précédentes,
**caractérisé en ce que**
le signal de commande (U_{M}) est un signal à modulation de largeur d'impulsion.
